# EUROPÄISCHE PATENTSCHRIFT

(11) **EP 0 823 984 B1**
(45) Veröffentlichungstag und Bekanntmachung des Hinweises auf die Patenterteilung: **26.02.2003**
(21) Anmeldenummer: 97112601.6
(22) Anmeldetag: 23.07.1997
(51) Int. Cl.: A01B 71/06

(54) **Schwenkkuppler**
Pivot coupling
Accouplement pivotant

(30) Priorität: 09.08.1996 US 695359
(43) Veröffentlichungstag der Anmeldung: 18.02.1998
(73) Patentinhaber: DEERE & COMPANY, Moline, Illinois 61265-8098 (US)
(72) Erfinder: Walters, James C., Ottumwa, Iowa 52501 (US); Mentzer, Matthew Jay, Ottumwa, Iowa 52501 (US); Parsons, Stephen Kenneth, Ottumwa, Iowa 52501 (US)
(74) Vertreter: Magin, Ludwig Bernhard

(56) Entgegenhaltungen:
- EP-A- 0 269 901
- EP-A- 0 434 915
- EP-A- 0 512 326
- EP-A- 0 540 912
- EP-A- 0 654 205
- DE-A- 4 333 035
- DE-C- 4 333 034
- FR-A- 2 532 146
- GB-A- 828 029
- US-A- 3 075 790
- US-A- 5 355 971

## Beschreibung

Die Erfindung betrifft einen Schwenkkuppler mit einer Schwenkachse, die einerseits mit einem gezogenen Gerät und andererseits über einen Querbalken bzw. einen Kupplungsteil mit unteren Lenkern bzw. einem Zugpendel eines Ackerschleppers verbindbar ist, eine vertikale Schwenkbewegung zwischen dem Ackerschlepper und Gerät erlaubt und eine Längsachse "X" definiert.

Die US-A-4,366,877 offenbart ein Mähgerät mit einem Hauptrahmen, der über eine horizontal schwenkbare Deichsel an einen Ackerschlepper anschließbar ist. Die Verbindung der Deichsel mit dem Ackerschlepper erfolgt über einen Schwenkkuppler, der eine Relativbewegung des Gespanns in jeder Richtung, d. h. um drei Achsen, zuläßt. Hierzu ist nach einem Ausführungsbeispiel dieses Standes der Technik ein Antrieb mit zwei übereinander gelegenen Getrieben vorgesehen, die um eine Hochachse gegeneinander verschwenkbar sind. Desweiteren ist ein Querbalken vorgesehen, der einerseits an untere Lenker des Ackerschleppers um eine quer zur Fahrtrichtung verlaufende Nickachse vertikal schwenkbar anschließbar ist und andererseits ein Rohr enthält, durch das sich eine Antriebswelle für das Mähgerät erstreckt und das um eine Längsachse vertikal schwenkbar auf der Antriebswelle gelagert ist. Anstelle eines Querbalkens mit Anschlußelementen für die unteren Lenker kann auch ein Querbalken mit einem Kardangelenk für den Anschluß an ein in der Höhe starres Zugpendel vorgesehen werden.

Das der Erfindung zugrunde liegende Problem wird darin gesehen, daß eine geringe Teilegleichheit zwischen den beiden Anbauversionen besteht.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise bleiben alle Teile ab der Schwenkachse und diese eingeschlossen bei beiden Anbauvarianten grundsätzlich gleich, weil sich die Verbindung mit der Deichsel in dem Schwenkkuppelrahmen vollzieht, der stets gleich bleibt und bereits die Möglichkeit, Relativbewegungen um zwei Achsen, nämlich die Längs- und die Hochachse zuzulassen, enthält. Lediglich die Verbindung zwischen der Schwenkachse und dem Ackerschlepper muß entsprechend angepaßt werden, was über den Querbalken oder den Kupplungsteil erfolgen kann, die an die gleiche Schwenkachse anbringbar sind. In der Praxis wird man allerdings bereits eine Vormontage des Querbalkens und des Kupplungsteils jeweils mit einer Schwenkachse vornehmen und diesen Zusammenbau wahlweise verwenden.

Das Entstehen hoher Biegemomente, das einen weiteren Nachteil des Standes der Technik darstellt, kann dadurch vermieden werden, daß der Schwenkkuppelrahmen auf seine Länge verteilt mehrere Lager aufweist, die an einen Längsabstand zueinander wahrenden Stellen die Schwenkachse schwenkbar in sich aufnehmen.

Eine Art kardanisches Gelenk ergibt sich, wenn der Querbalken sowohl quer als auch längs zur Fahrtrichtung schwenken kann, was durch den vertikal schwenkbaren Anschluß an die Unterlenker bzw. mit der drehbaren Schwenkachse erreichbar ist.

Eine Nickbewegung des Gespanns, d. h. eine vertikale Schwenkbewegung um eine quer zur Fahrtrichtung verlaufende horizontale Achse, ist auch dann möglich, wenn das Gespann mittels eines Zugpendels miteinander verbunden ist, wenn dieses direkt oder mittels eines Adapters über einen entsprechend aufgenommenen Kupplungsbolzen an den mit der Schwenkachse verbundenen Kupplungsteil angeschlossen wird.

Eine fertigungstechnisch einfache und ausreichend feste Verbindung zwischen der Schwenkachse und dem Kupplungsteil wird dadurch erreicht, daß der Kupplungsteil zwei vertikale Platten jeweils mit zueinander ausgerichteten Anschlußlöchern aufweist, wobei die Platten an der Schwenkachse befestigt, insbesondere angeschweißt sind. Selbstverständlich können die Platten auch lösbar an die Schwenkachse angeflanscht werden.

Die Ausbildung des Adapters mit Seitenplatten hat den Vorteil, daß das Gerät seitlich gut geführt werden kann und nicht ins Schlingern gerät; gegebenenfalls können hierfür auch Anlageschrauben verwendet werden, die jegliches Spiel ausschalten. Zur Herstellungsvereinfachung sind die Anschlußlöcher zur Aufnahme des Kupplungsbolzens ebenfalls in diesen Platten vorgesehen.

Eine Verringerung der auf das Zugpendel wirkenden Biegemomente kann dadurch erreicht werden, daß der Zugpendelaufnehmer beidseitig offen ist und somit das Zugpendel soweit wie möglich aufnehmen kann.

Wenn sich der Kupplungsbolzen unmittelbar oberhalb eines das Zugpendel in dem Adapter haltenden Anhängebolzens erstreckt ist gewährleistet, daß er nicht aus der Verbindung austreten kann, was ansonsten bei dem Betrieb auf rauhem Boden zu befürchten wäre.

Die Antriebskomponenten des Schwenkkupplers werden im wesentlichen dadurch belastungsfrei gehalten, daß der Schwenkkuppelrahmen selbst alle Belastungen aufnimmt und die Verbindung zwischen den jeweiligen Komponenten besorgt. Das bzw. die von dem Schwenkkuppelrahmen getragenen Getriebe, insbesondere Winkelgetriebe, brauchen lediglich die Antriebs-kraft durchzuleiten.

Die Einleitung und großflächige Aufnahme der Kräfte aus der Schwenkachse ist gewährleistet, wenn sich die Wände über einen wesentlichen Teil von deren Länge erstrecken und diese somit an weit voneinander entfernten Stellen halten können, und untereinander mittels einer Platte zu einem festen Schweißzusammenbau zusammengehalten werden.

Die Schwenkachse wird einerseits in der Zugrichtung festgelegt und kompakt mit dem Schwenkkuppelrahmen verbunden, indem die Lager einerseits zwischen Flanschen der Wände und der Platte und andererseits zwischen Stützringen auf der Schwenkachse gehalten sind.

In der Zeichnung ist ein nachfolgend näher beschriebenes Ausführungsbeispiel der Erfindung dargestellt. Es zeigt:
- Fig. 1: einen erfindungsgemäßen Schwenkkuppler, der mittels eines Querbalkens an einen Ackerschlepper angebaut ist, in Seitenansicht,
- Fig. 2: den Schwenkkuppler in Draufsicht,
- Fig. 3: den Schwenkkuppler in einer perspektivischen Ansicht von der Seite,
- Fig. 4: den erfindungsgemäßen Schwenkkuppler, der mittels eines Kupplungsteils an einen Ackerschlepper angebaut ist, in Seitenansicht,
- Fig. 5: den Schwenkkuppler aus Figur 4 in Draufsicht,
- Fig. 6: den Schwenkkuppler aus Figur 4 in einer perspektivischen Ansicht von der Seite.

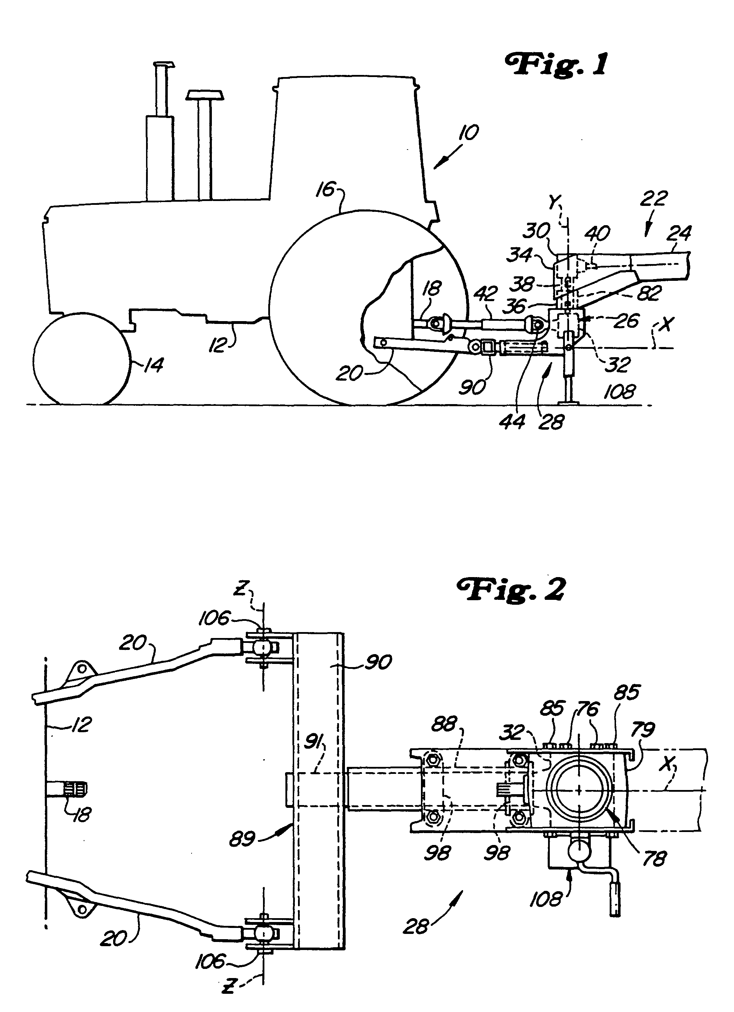

In den Figuren 1 und 2 ist, wenn auch nur teilweise, ein Ackerschlepper 10 mit einem sich längs erstreckenden Chassis 12 gezeigt, das von einem Paar lenkbarer vorderer Räder 14 und einem Paar angetriebener rückwärtiger Räder 16 getragen wird. Der Ackerschlepper 10 weist ein nicht gezeigtes von einem Motor angetriebenes Getriebe mit einer Zapfwelle 18 auf, die sich durch eine rückwärtige Wand des Getriebegehäuses zu einer mittig zwischen den rückwärtigen Rädern 16 liegenden Stelle erstreckt. Ein Paar von Unterlenkern 20 ist zwischen den rückwärtigen Rädern 16 an sich gegenüberliegenden Seiten des Chassis 12 vertikal schwenkbar angebracht und weist jeweils den gleichen Abstand zu der Zapfwelle 18 auf. Ein nicht gezeigter Oberlenker wäre bei Ackerschleppern vorhanden, die mit einer Dreipunktkupplung versehen sind, die allerdings bei dem vorliegenden Schwenkkuppler nicht verwendet würde.

Wie es in Figur 1 gezeigt ist, wird das vordere Ende eines gezogenen und von der Zapfwelle 18 angetriebenen Geräts 22, z. B. eines Mähgerätes, von einer Deichsel 24, die ein Getriebe 26 trägt, das an die Zapfwelle 18 angeschlossen ist, und einem erfindungsgemäßen Schwenkkuppler 28 gebildet, der mit den Unterlenkern 20 des Ackerschleppers 10 verbunden ist. Im einzelnen enthält das Getriebe 26 obere und untere identische als Winkelgetriebe in Rechtwinkelbauweise ausgebildete Getriebe 30 und 32, von denen das obere Getriebe 30 zwischen parallel zueinander und vertikal verlaufenden Platten 34 gehalten ist, die das vordere Ende der Deichsel 24 bilden, und von denen das untere Getriebe 32 in der Schnittstelle 36 schwenkbar an die Deichsel 24 zum Ausführen einer Schwenkbewegung um eine Hochachse "Y" gegenüber dem oberen Getriebe 30 und somit auch gegenüber der Deichsel 24 angeschlossen ist. Das untere Getriebe 32 besitzt eine nicht dargestellte Ausgangswelle, die sich entlang der Hochachse "Y" erstreckt und mittels einer Kupplung 38 an eine gleichermaßen ausgerichtete nicht gezeigte Eingangswelle des oberen Getriebes 30 angeschlossen ist, wobei das letztgenannte eine sich nach hinten erstreckende Ausgangswelle enthält, die an einen nicht gezeigten Antriebsstrang für den Antrieb von nachfolgenden Antriebsaggregaten des Gerätes 22 angeschlossen ist. Eine teleskopische Gelenkwelle 42 ist zwischen eine nach vorne gerichtete Eingangswelle 44 des unteren Getriebes 32 und die Zapfwelle 18 des Ackerschleppers 10 eingefügt.

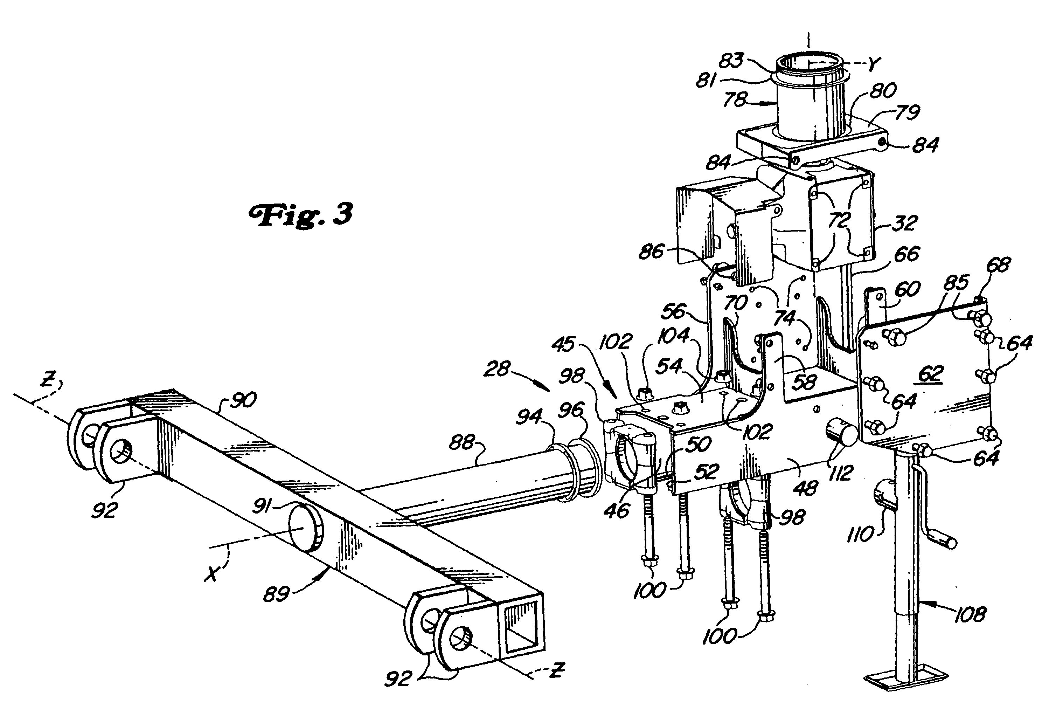

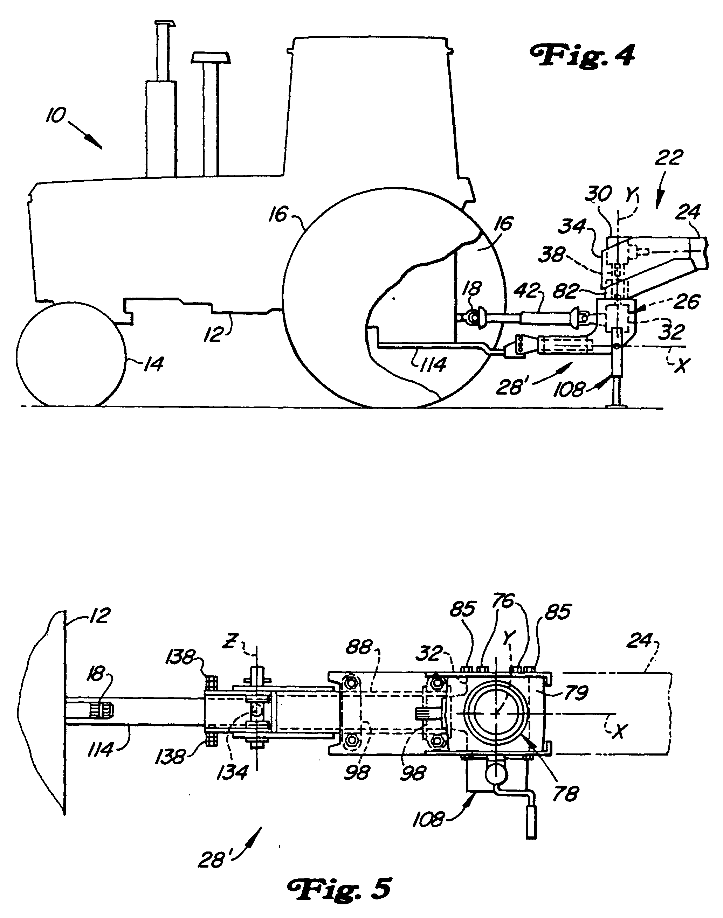

Es wird nun Bezug auf das in den Figuren 2 und 3 Gezeigte genommen; dort ist zu sehen, daß das untere Getriebe 32 in der Draufsicht im allgemeinen von rechtwinkliger Bauweise ist und daß es sich innerhalb einer entsprechend geformten Ausnehmung befindet, die von einem einen Schwenkkuppelrahmen 45 bildenden Schweißzusammenbau gebildet wird. Im Detail weist der Schwenkkuppelrahmen 45 in der Querrichtung voneinander beabstandete, vertikal ausgerichtete, rechte und linke Seitenwände 46 bzw. 48 auf, deren jeweilige Böden von sich nach innen erstreckenden horizontalen Flanschen 50 und 52 gebildet werden. Mit einem vertikalen Abstand zu den Flanschen 50 und 52 und sich parallel zu diesen erstreckend ist eine horizontale Platte 54 vorgesehen, die über den oberen Kanten der vorderen Bereiche der Seitenwände 46 und 48 gelegen und mit diesen verschweißt ist. Ein rückwärtiger Bereich der Platte 54 ist gegenüber dem vorderen Bereich nach innen abgestuft und zwischen vorderen Bereichen eines sich nach oben erstreckenden rückwärtigen Abschnitts 56 der rechten Seitenwand 46 und eines vorderen sich aufwärts erstreckenden Stegs 58 der linken Seitenwand 48 vorgesehen. Die linke Seitenwand 48 enthält ferner eine demontierbare Platte 62, die entsprechend dem rückwärtigen Abschnitt 56 der rechten Seitenwand 46 bemessen ist, und den Abstand zwischen den Stegen 58 und 60 überbrückt, wobei sie an die Stege 58 und 60 und andere Teile der Seitenwand 48 mittels einer Vielzahl von Schrauben 64 angeschraubt ist. Jeweilige rückwärtige Enden des rückwärtigen Abschnitts 56 der rechten Seitenwand 46 und der Platte 62 werden von nach innen weisenden vertikalen Flanschen 66 und 68 gebildet. Ein Verstärkungsteil 70, der in Seitenansicht eine U-Form einnimmt, ist mit seiner Einbuchtung zwischen die rechte und die linke Seitenwand 46 und 48 eingeschweißt und bildet schließlich eine rückwärtige Erstreckung der Platte 54, wobei der vordere und der rückwärtige Schenkel jeweils nahe der rückwärtigen Kante jeder der Streben 58 und 60 gelegen ist. Ein rechteckförmiges Lochbild von abgesetzten Gewindebohrungen 72 ist in jeder der sich gegenüberliegenden Seitenwände des Getriebes 32 vorgesehen und ein dazu passendes Lochbild von Löchern 74 befindet sich in dem rückwärtigen Abschnitt 56 der rechten Seitenwand 46. Eine Vielzahl von Schrauben 76 - sh. Figur 2 und 5 - ist durch die Löcher 74 gesteckt und in die Gewindebohrungen 72 eingeschraubt, die sich in der rechten Seitenwand des Getriebes 32 befinden, um somit den Schwenkkupplerrahmen 45 an das Getriebe 32 anzubauen. Es wird hier darauf hingewiesen, daß der Abstand zwischen der Platte 62 und dem rückwärtigen Abschnitt 56 der rechten Seitenwand 46 derart groß ist, daß das Getriebe 32 stramm in Sandwichbauweise zwischen die Platte 62 und den rückwärtigen Abschnitt 56 paßt. Die Ausgangswelle des unteren Getriebes 32 erstreckt sich mittig durch eine zylindrische rohrförmige Schwenkhülse 78, die einen Teil der Schnittstelle 36 darstellt, die ebenfalls einen Teil des Schwenkkupplerrahmens 45 bildet. Eine horizontale Befestigungsplatte 79 ist in einen unteren Endbereich der Schwenkhülse 78 integriert und diesem gegenüber mittig ausgerichtet. Die Befestigungsplatte 79 besitzt eine Ringnut 80 in ihrer oben gelegenen Oberfläche, die sich um die Schwenkhülse 78 herum erstreckt und ein Gleitlager 81 aufnimmt, auf dem ein unteres Ende eines zylindrischen und rohrförmigen Aufnehmers 82 aufsitzt, der von der Deichsel 24 getragen wird und der die Schwenkhülse 78 in sich aufnimmt. Eine in dem oberen Bereich der Schwenkhülse 78 angeordnete Ringnut 83 befindet sich oberhalb des Aufnehmers 82 und enthält einen nicht gezeigten Sicherungsring, der die Schwenkhülse 78 innerhalb des Aufnehmers 82 lagesichert. Die Befestigungsplatte 79 enthält ferner sich gegenüberliegende nach außen weisende flache Flächen, die jeweils ein Paar abgesetzter Gewindebohrungen 84 enthalten, die jeweils Schrauben 85 aufnehmen, die wiederum sich durch Löcher 86 sowohl in dem rückwärtigen Abschnitt 56 als auch in der Platte 62 erstrecken.

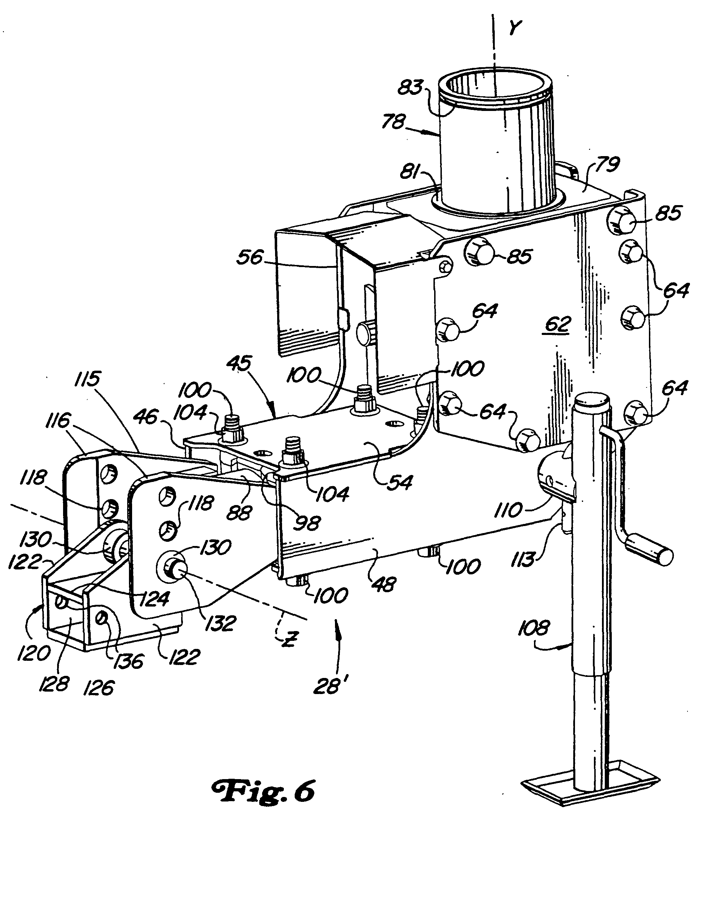

Der Schwenkkuppler 28 enthält weiterhin eine rohrförmige zylindrische und horizontal verlaufende Schwenkachse 88, deren vorderes Ende an einen Kupplungsteil 89 angeschlossen ist und einen rohrförmigen Querbalken 90, sowie eine Zylinderstange 91 einschließt. Dessen rückwärtiger Endbereich ist in die Schwenkachse 88 eingeschweißt, während sich der vordere Endbereich durch den Querbalken 90 erstreckt und mit diesem verschweißt ist und zwar an einer Stelle mittig zwischen sich nach vorne öffnenden vertikalen Anschlußgabeln 92, die sich an gegenüberliegenden Enden des Querbalkens 90 befinden. Ein vorderer und ein rückwärtiger Stützring 94 bzw. 96 sind unter Wahrung eines in der Längsrichtung verlaufenden Abstandes zwischen einander an den rückwärtigen Endbereich der Schwenkachse 88 angebracht. Die Schwenkachse 88 befindet sich zwischen den Seitenwänden 46 und 48 und unterhalb der horizontalen Platte 54 des Schwenkkupplerrahmens 45. Zum Anschluß der Schwenkachse 88 an den Schwenkkupplerrahmen 45, und zwar in einer Art, daß eine Schwenkbewegung um eine sich horizontal erstreckende Längsachse "X" möglich ist, sind vordere und rückwärtige aufgetrennte Lager 98 vorgesehen. Im einzelnen sind sich gegenüberliegende Hälften des rückwärtigen Lagers 98 um die Schwenkachse 88 in einem Bereich zwischen den Stützringen 94 und 96 angeordnet, und mittels Klemmschrauben 100 sowohl zusammen als auch an dem Schwenkkupplerrahmen 45 gehalten. Die Klemmschrauben 100 erstrecken sich jeweils vertikal nach oben durch aneinander ausgerichtete Löcher in den Flanschen 50 und 52, in sich gegenüberliegenden Hälften des rückwärtigen Lagers 98 und in einen Satz von Löchern 102 in der Platte 54, um schließlich Muttern 104 aufzunehmen, die fest auf die Schrauben 100 aufgezogen werden, um die Teile zusammenzuhalten. Sich gegenüberliegende Hälften des vorderen Lagers 98 sind um die Schwenkachse 88 in einem Bereich angeordnet, der nahe des Querbalkens 90 liegt und sind miteinander und an den Schwenkkupplerrahmen 45 mittels eines anderen Satzes rechter und linker Klemmschrauben angeschlossen, die sich jeweils vertikal nach oben durch aneinander ausgerichtete Löcher in den Flanschen 50 und 52, in den Hälften der Lager 98 und in der Platte 54 befinden. Jeweilige Muttern 104 werden auf diesen Klemmschrauben 100 aufgenommen und werden angelegt, um die zugeordneten Teile lagezusichern. Wie es in den Figuren 1 und 2 gezeigt ist, sind die Unterlenker 20 des Ackerschleppers 10 jeweils mittels Schwenkbolzen 106 vertikal schwenkbar an die Anschlußgabeln 92 des Querbalkens 90 angeschlossen, die aneinander entlang einer horizontalen Quer- oder Nickachse "Z" ausgerichtet sind. Eine Abstellstütze 108 enthält einen zylindrischen Aufnehmer 110, der auf einem Haltebolzen 112 aufgenommen ist, der sich nach außen von der Seitenwand 48 forterstreckt, an der er auch befestigt ist. Der Aufnehmer 110 ist mit Befestigungslöchern versehen, die gegeneinander um 90 Grad versetzt sind, um abwechselnd mit sich vertikal erstreckenden Löchern in dem Haltebolzen 112 in Deckung zu geraten und einen Verbindungsbolzen 113 - sh. Figur 6 - aufzunehmen, wobei die Abstellstütze 108 zwischen einer dargestellten aufrechten Parkstellung und einer horizontalen Außerbetriebsstellung beweglich ist.

Es wird nun Bezug auf das in den Figuren 4, 5 und 6 Gezeigte genommen, in denen ein alternativer Schwenkkuppler 28' gezeigt ist, der zum Anschluß an ein Zugpendel 114 eines Ackerschleppers 10 ausgebildet ist und viele Komponenten aufweist, die mit denen identisch sind, die zuvor in Verbindung mit dem Schwenkkuppler 28 beschrieben worden sind. Der Kürze wegen werden diese Komponenten nicht mehr weiter beschrieben, sondern mit denselben Bezugszeichen wie die zuvor beschriebenen Komponenten versehen.

Ein Unterschied zwischen dem Schwenkkuppler 28' und dem Schwenkkuppler 28 besteht darin, daß ein Kupplungsteil 115 an die Stelle des zuvor beschriebenen Kupplungsteils 89 tritt. Im einzelnen enthält der Kupplungsteil 115 ein Paar einen Querabstand aufweisender, vertikaler Platten 116, die an sich gegenüberliegenden Seiten des vorderen Endes der Schwenkachse 88 angeschweißt sind, um eine vertikale Anschlußgabel zu bilden. Die die Anschlußgabel bildenden Platten 116 sind jeweils mit einer Vielzahl in der Vertikalrichtung einen Abstand zueinander aufweisender Anschlußlöcher 118 versehen, wobei die Anschlußlöcher 118 einer Platte 116 an denen der anderen Platte 116 ausgerichtet sind, um entsprechende Sätze von Anschlußlöchern 118 zu bilden. Ein weiterer Unterschied besteht in dem Vorsehen eines Adapters 120, bzw. eines Zugpendelanschlußstücks, der ein Paar in der Querrichtung beabstandeter Seitenplatten 122 aufweist, die mittels vertikal getrennter oberer und unterer Platten 124 und 126 verbunden sind und mit diesen zusammenwirken, um einen Zugpendelaufnehmer 128 zu bilden, dessen Querschnitt im wesentlichen dem des Zugpendels 114 entspricht. Obere rückwärtige Bereiche der Seitenplatten 122 des Adapters 120 sind mit aneinander ausgerichteten Löchern versehen, in die Zylinderbüchsen 130 eingeschweißt sind. Der Adapter 120 befindet sich zwischen den Platten 116 und ist an diese mittels eines Kupplungsbolzens 132 angeschlossen, der in einem Satz von Anschlußlöchern 118 und den Zylinderbüchsen 130 aufgenommen wird. Der Kupplungsbolzen 132 definiert die horizontale Quer- oder Nickachse "Z".

Das Zugpendel 114 erstreckt sich durch den Zugpendelaufnehmer 128 des Adapters 120, wobei letzterer mit vertikal aneinander ausgerichteten in Figur 6 nicht sichtbaren Löchern in den oberen und unteren Platten 124 und 126 versehen ist, die nach einer Bohrung in dem Zugpendel 114 ausgerichtet sind. Ein Anhängebolzen 134 wird in diesen aneinander ausgerichteten Löchern aufgenommen und sichert damit den Adapter 120 auf dem Zugpendel 114. Es wird bemerkt, daß der Adapter 120 normalerweise vor dem Anschluß an die Platten 116 mittels des Kupplungsbolzens 132 vormontiert wird. Obwohl es für einen erfolgreichen Betrieb nicht erforderlich ist, wird trotzdem bemerkt, daß sich, wenn der Adapter 120 an die Platten 116 angeschlossen ist, der Kupplungsbolzen 132 direkt oberhalb und nahe zu dem Anhängebolzen 134 befindet, um so dessen Austreten aus den Haltelöchern zu vermeiden. Der Adapter 120 enthält ferner einen Satz in der Querrichtung aneinander orientierter Gewindebohrungen 136, die sich in dem vorderen Bereich der Seitenplatten 122 befinden und Schrauben 138 aufnehmen, deren Zweck darin besteht, jegliches Spiel, das zwischen dem Zugpendelaufnehmer 128 und den Seitenflächen des Zugpendels 114 bestehen könnte, aufzufangen.

Es wird darauf hingewiesen, daß ein beträchtlicher Teil des Gewichts der Deichsel 24 und der von ihr getragenen Antriebskomponenten mittels des Kupplungsbolzens 132 auf das Zugpendel 114 übertragen wird. Dementsprechend ist der Kupplungsbolzen 132 soweit vorne auf dem Zugpendel 114 angeordnet, wie es praktisch erscheint, um die von dem Gewicht auf das Zugpendel 114 ausgeübten Biegekräfte so weit wie möglich zu reduzieren.

Die Funktionen der Schwenkkuppler 28, 28' sind insofern gleich bzw. ähnlich, als sie an das schwenkbar angebrachte untere Getriebe 32 angebracht sind und es damit dem Ackerschlepper 10 ermöglichen, in bezug auf das Gerät 22 um die Hochachse "Y" zu wenden. Ferner wird, wenn sich das aus dem Ackerschlepper 10 und dem Gerät 22 bestehende Gespann über unebenen Grund bewegt, eine Relativbewegung um die Längsachse "X" auftreten, die von der sich längs erstreckenden Schwenkachse 88 erlaubt wird. Schließlich wird eine Relativbewegung um die Nickachse "Z" auftreten, was von den Schwenkbolzen 106, wie sie bei der Ausführung nach den Figuren 1 bis 3 vorhanden sind, oder von dem Kupplungsbolzen 132, wie er in der Ausführung nach den Figuren 4 bis 6 gezeigt ist, zugelassen wird.

Es wird somit erkenntlich, daß die Schwenkkuppler 28 und 28' einen großen Anteil gleicher Teile besitzen und der Hauptunterschied zwischen den Kupplungsteilen 89 und 115 zu sehen ist, die an das vordere Ende der sich längs erstreckenden Schwenkachse 88 angeschlossen sind, um letztere zum Anschluß entweder an ein Paar Unterlenker 20 oder ein Zugpendel 114 des Ackerschleppers 10 anzupassen. Es wird bemerkt, daß die Abstellstütze 108 nur im gewissen Maß zum Anschluß des Schwenkkupplers 28' an das Zugpendel 114 erforderlich ist, da sie die Deichsel 24 in der richtigen Höhe für den Adapter 120 hält, der auf dem Zugpendel 114 vormontiert wurde, um an die Platten 116 des Kupplungsteils 115 angeschlossen zu werden. Die Abstellstütze 108 kann bei dem Schwenkkuppler 28 aber auch entfallen, da die Unterlenker 20 mittels eines herkömmlichen hydraulisch betätigten, nicht gezeigten Gestänges angehoben und abgesenkt werden können, das sich auf dem Ackerschlepper 10 befindet. Der Abstellstütze 108 bedarf er auch dann nicht, wenn die Deichsel 24 auf andere Weise in der richtigen Höhe zu dem Zugpendel 114 gehalten werden kann.

## Patentansprüche

1. Schwenkkuppler (28, 28') mit einer Schwenkachse (88), die einerseits mit einem gezogenen Gerät (22) und andererseits über einen Querbalken (90) bzw. einen Kupplungsteil (115) mit unteren Lenkern (20) bzw. einem Zugpendel (114) eines Ackerschleppers (10) verbindbar ist, eine vertikale Schwenkbewegung zwischen dem Ackerschlepper (10) und dem Gerät (22) erlaubt und eine Längsachse "X" definiert, **gekennzeichnet durch** einen Schwenkkuppelrahmen (45), der:
a) auf die Schwenkachse (88) um die Längsachse "X" vertikal schwenkbar aufgesetzt ist;
b) ein Getriebe (32), das zum Antrieb des Geräts (22) mit einem zweiten von einer Deichsel (24) des Geräts (22) gehaltenen Getriebe (30) in Antriebsverbindung bringbar ist, so trägt, und
c) zwischen den beiden Getrieben (30, 32) formschlüssig und horizontal schwenkbar so von der Deichsel (24) aufgenommen wird, daß die Getriebe (30,32) lediglich die Antriebskraft durchzuleiten brauchen.

2. Schwenkkuppler nach Anspruch 1, **dadurch gekennzeichnet, daß** der Schwenkkuppelrahmen (45) auf seine Länge verteilt mehrere Lager (98) aufweist, die an einen Längsabstand zueinander wahrenden Stellen die Schwenkachse (88) schwenkbar in sich aufnehmen.

3. Schwenkkuppler nach Anspruch 1 oder 2, **dadurch gekennzeichnet, daß** der Querbalken (90) mittig mit der Schwenkachse (88) verbunden ist, sich quer zur Fahrtrichtung erstreckt und seitlich Anschlußgabeln (92) aufweist, die dem Anschluß an die unteren Lenker (20) dienen und eine vertikale Schwenkbewegung um eine Nickachse "Z" zulassen.

4. Schwenkkuppler nach Anspruch 1, **dadurch gekennzeichnet, daß** der Kupplungsteil (115) mit wenigstens einem Anschlußloch (118) versehen und ein Adapter (120) auf dem Zugpendel (114) mit wenigstens einem korrespondierenden Loch vorgesehen ist, die der Aufnahme eines Kupplungsbolzens (132) dienen und gemeinsam mit diesem eine Nickachse "Z" bilden.

5. Schwenkkuppler nach Anspruch 4, **dadurch gekennzeichnet, daß** der Kupplungsteil (115) zwei vertikale Platten (116) jeweils mit zueinander ausgerichteten Anschlußlöchern (118) aufweist, wobei die Platten (116) an der Schwenkachse (88) befestigt, insbesondere angeschweißt sind.

6. Schwenkkuppler nach Anspruch 3 oder 4, **dadurch gekennzeichnet, daß** der Adapter (120) Seitenplatten (122) besitzt, die einen Zugpendelaufnehmer (128) für das Zugpendel (114) seitlich begrenzen, und das Loch zur Verbindung mit den Anschlußlöchern (118) enthält.

7. Schwenkkuppler nach einem der Ansprüche 3 bis 6, **dadurch gekennzeichnet, daß** der Zugpendelaufnehmer (128) in der Aufnahmerichtung des Zugpendels (114) beidseitig offen und zu einer weitest möglichen Aufnahme des Zugpendels (114) ausgebildet ist.

8. Schwenkkuppler nach einem der Ansprüche 3 bis 7, **dadurch gekennzeichnet, daß** sich der Kupplungsbolzen (132) unmittelbar oberhalb eines das Zugpendel (114) in dem Adapter (120) haltenden Anhängebolzen (134) erstreckt.

9. Schwenkkuppler nach einem oder mehreren der vorherigen Ansprüche, **dadurch gekennzeichnet, daß** der Schwenkkuppelrahmen (45) vertikal verlaufende Wände (46, 48) und/oder Stege (58, 60) aufweist, die zwischen sich eine horizontale Befestigungsplatte (79) mit einer Schwenkhülse (78) aufnehmen, die in einem mit der Deichsel (24) verbundenen Aufnehmer 82 um eine Hochachse "Y" horizontal schwenkbar gehalten ist.

10. Schwenkkuppler nach Anspruch 9, **dadurch gekennzeichnet, daß** sich die Wände (46, 48) seitlich eines wesentlichen Teils der Schwenkachse (88) erstrecken und über eine Platte (54) miteinander verbunden sind.

11. Schwenkkuppler nach einem oder mehreren der vorherigen Ansprüche, **dadurch gekennzeichnet, daß** die Lager (98) einerseits zwischen Flanschen (50, 52) der Wände (46, 48) und der Platte (54) und andererseits zwischen Stützringen (94, 96) auf der Schwenkachse (88) gehalten sind.

## Claims

1. A swivel hitch (28, 28') with a pivot shaft (88) which can be connected on the one hand to a towed implement (22) and on the other hand through a transverse beam (90) or a coupling part (115) to the lower links (20) or a drawbar (114) of an agricultural tractor (10), which allows vertical pivotal movement between the agricultural tractor (10) and the implement (22) and which defines a longitudinal axis "X", **characterized by** a swivel coupling frame (45) which:
a) is fitted on the pivot shaft (88) to pivot vertically about the longitudinal axis "X",
b) carries a gearbox (32) so that it can be brought into driving connection with a second gearbox (30) held by a tongue (24) of the implement (22), for driving the implement (22), and
c) c) is so received between the two gearboxes (30, 32) in positively engaged manner and able to pivot horizontally that the gearboxes (30, 32) merely have to transmit the drive force.

2. A swivel hitch according to claim 1, **characterized in that** the swivel coupling frame (45) has a plurality of bearings (98) distributed over its length, which receive the pivot shaft (88) pivotally at places maintained longitudinally spaced from one another.

3. A swivel hitch according to claim 1 or 2, **characterized in that** the transverse beam (90) is connected centrally to the pivot shaft (88), extends transverse to the direction of travel and has clevises (92) at the sides, which allow attachment to the lower links (20) and allow vertical pivotal movement about a pitch axis "Z".

4. A swivel hitch according to claim 1, **characterized in that** the coupling part (115) is provided with at least one attachment hole (118) and an adapter (120) on the drawbar (114) is provided with at least one corresponding hole, which holes serve to receive a coupling pin (132) and form a pitch axis "Z" together therewith.

5. A swivel hitch according to claim 4, **characterized in that** the coupling part (115) comprises two vertical plates (116) with respective attachment holes (118) aligned with one another, wherein the plates (116) are fixed on the pivot shaft (88), especially welded thereon.

6. A swivel hitch according to claim 3 or 4, **characterized in that** the adapter (120) has side plates (122) which delimit a drawbar receptacle (128) for the drawbar (114) at the sides, and has the hole for the connection to the attachment holes (118).

7. A swivel hitch according to any of claims 3 to 6, **characterized in that** the drawbar receptacle (128) is open on both sides in the direction of reception of the drawbar (114) and is designed for widest possible reception of the drawbar (114).

8. A swivel hitch according to any of claims 3 to 7, **characterized in that** the coupling pin (132) extends directly above a hitch pin (134) holding the drawbar (114) in the adapter (120).

9. A swivel hitch according to one or more of the preceding claims, **characterized in that** the swivel coupling frame (45) has vertically extending walls (46, 48) and/or bars (58, 60) which receive a horizontal attachment plate (79) therebetween, with a pivot sleeve (78) which is retained in a receptacle (82) attached to the tongue (24) so as to pivot horizontally about a yaw axis "Y".

10. A swivel hitch according to claim 9, **characterized in that** the walls (46, 48) extend at the sides over a substantial part of the pivot shaft (88) and are connected together by a plate (54).

11. A swivel hitch according to one or more of the preceding claims, **characterized in that** the bearings (98) are kept for the one part between flanges (50, 52) of the walls (46, 48) and the plate (54) and for the other part between thrust rings (94, 96) on the pivot shaft (88).

## Revendications

1. Accouplement pivotant (28,28') comportant un axe de pivotement (88), qui peut être relié d'une part à un appareil tracté (22) et d'autre part, par l'intermédiaire d'une poutre transversale (90) ou d'une partie d'accouplement (115), à des leviers oscillants inférieurs (20) ou à un organe pendulaire de traction (114) d'un tracteur agricole (10), permet un mouvement pendulaire entre le tracteur agricole (10) et l'appareil (22) et définit un axe longitudinal "X", **caractérisé par** un cadre (45) de l'accouplement pivotant, qui :
a) est monté sur l'axe de pivotement (88) de manière à pouvoir pivoter verticalement autour de l'axe longitudinal "X";
b) porte un mécanisme (32), qui, pour l'entraînement de l'appareil (22), peut être amenée à coopérer, selon une liaison motrice, avec un second mécanisme (30) retenue par le timon (24) de l'appareil (22), de telle sorte et
c) est logé et reçu par le timon (24) selon une liaison par formes complémentaires et avec possibilité de pivotement horizontal entre les deux mécanismes (30,32), de telle sorte que les mécanismes (30,32) ont à transmettre uniquement la force d'entraînement.

2. Accouplement pivotant selon la revendication 1, **caractérisé en ce que** le cadre (45) de l'accouplement pivotant comporte plusieurs paliers (98), qui sont répartis sur sa longueur et logent en eux avec possibilité de pivotement l'axe de pivotement (88), en des emplacements qui garantissent entre eux une distance longitudinale.

3. Accouplement pivotant selon les revendications 1 ou 2, **caractérisé en ce que** la barre transversale (90) est reliée en son centre à l'axe de pivotement (90), s'étend transversalement par rapport à la direction de déplacement et possède latéralement des fourches de raccordement (92), qui permettent le raccordement aux leviers articulés inférieurs (20) et permettent un mouvement de pivotement vertical autour d'un axe de basculement "Z".

4. Accouplement pivotant selon la revendication 1, **caractérisé en ce que** la partie d'accouplement (115) est pourvue d'au moins un trou de raccordement (118) et qu'un adaptateur (120) prévu sur l'élément pendulaire de traction (114) comportant au moins un trou correspondant, ces trous servant à recevoir un goujon d'accouplement (132) et formant conjointement avec ce dernier un axe de basculement "Z".

5. Accouplement pivotant selon la revendication 4, **caractérisé en ce que** la partie d'accouplement (115) comporte deux plaques verticales (116) comportant chacune des trous de raccordement (118) alignés entre eux, les plaques (116) étant fixées, notamment par soudage, à l'axe de pivotement (88).

6. Accouplement pivotant selon la revendication 3 ou 4, **caractérisé en ce que** l'adaptateur (120) possède des plaques latérales (122), qui délimitent latéralement un logement (128) pour l'organe pendulaire de traction (114), et contient le trou pour la liaison avec les trous de raccordement (118).

7. Accouplement pivotant selon l'une des revendications 3 à 6, **caractérisé en ce que** le logement (128) pour l'organe pendulaire de traction est ouvert des deux côtés dans la direction de réception de l'organe pendulaire de traction (114) et est agencé pour loger aussi largement que possible l'organe de traction pendulaire (114).

8. Accouplement pivotant selon l'une des revendications 3 à 7, **caractérisé en ce que** le goujon d'accouplement (132) s'étend directement au-dessus d'un goujon d'attelage (134) qui retient l'organe pendulaire de traction (114) dans l'adaptateur (120).

9. Accouplement pivotant selon une ou plusieurs des revendications précédentes, **caractérisé en ce que** le cadre (45) de l'accouplement pivotant comporte des parois (46,48) et/ou des barrettes (58,60) qui s'étendent verticalement et logent entre elles une plaque horizontale de fixation (79) comportant une douille pivotante (78), qui est retenue de manière à pouvoir pivoter horizontalement autour d'un axe vertical "Y" dans un logement (82) relié au timon (24).

10. Accouplement pivotant selon la revendication 9, **caractérisé en ce que** les parois (46,48) s'étendent latéralement par rapport à une partie importante de l'axe de pivotement (88) et sont reliées entre elles par une plaque (54).

11. Accouplement pivotant selon une ou plusieurs des revendications précédentes, **caractérisé en ce que** les paliers (98) sont retenus d'une part entre les brides (50,52) des parois (46,48) et la plaque (54) et d'autre part entre des bagues d'appui (94, 96) sur l'axe de pivotement (88).
